# EUROPÄISCHE PATENTSCHRIFT

(11) **EP 0 568 914 B1**
(45) Veröffentlichungstag und Bekanntmachung des Hinweises auf die Patenterteilung: **17.06.1998**
(21) Anmeldenummer: 93106873.8
(22) Anmeldetag: 28.04.1993
(51) Int. Cl.: H04N 5/14, H03K 5/12, H04L 25/06

(54) **Anordnung zur zeitlichen Detektion einer Signalflanke eines auf einer Übertragungsleitung übertragenen elektrischen Signals**
Device for detecting signal edges of electrical signals transmitted on a transmission line
Dispositif de détection temporelle de transitions de signaux électriques transmis sur une ligne de transmission

(30) Priorität: 06.05.1992 DE 4214949
(43) Veröffentlichungstag der Anmeldung: 10.11.1993
(73) Patentinhaber: NOKIA TECHNOLOGY GmbH, 75175 Pforzheim (DE)
(72) Erfinder: Reime, Gerd, W-7542 Schömberg 4 (DE)

(56) Entgegenhaltungen:
- EP-A- 0 263 617
- EP-A- 0 302 500
- EP-A- 0 478 024
- DE-A- 4 039 122
- GB-A- 2 144 302
- GB-A- 2 213 022
- US-A- 4 758 891
- PATENT ABSTRACTS OF JAPAN vol. 14, no. 489 (E-994)24. Oktober 1990 & JP-A-02 202 274
- PATENT ABSTRACTS OF JAPAN vol. 16, no. 052 (E-1164)10. Februar 1992 & JP-A-03 252 273
- PATENT ABSTRACTS OF JAPAN vol. 15, no. 319 (E-1100)14. August 1991 & JP-A-03 117 995

## Beschreibung

Die Erfindung bezieht sich auf eine Flankendetektionsanordnung gemäß dem Text des Oberbegriffes des Anspruches 1.

Signalflanken in übertragenen Signalen sind häufig markante Stellen innerhalb des übertragenen Signales, die insbesondere in der Meßtechnik oder in der Übertragungstechnik von einem Signalzustand in einen anderen Signalzustand überleiten.

Eine Detektoranordnung zur Detektion auch verhältnismäßig flacher Signalflanken eines auf einer Übertragungsleitung übertragenen amplitudenmodulierten Farbdifferenzsignales ist aus der Technischen Information TI 891023 der Firma Phillips mit dem Titel "Die Schaltung TDA 4670 zur Bildsignal-Nachverarbeitung im Fernsehempfänger" bekannt. In dieser Flankendetektoranordnung ist an jede der beiden Farbdifferenz-Übertragungsleitungen eines Farbfernsehers ein differenzierender Flankendetektor angeschlossen, der an seinem Ausgang ein von der Art der detektierten Signalflanke abhängiges Detektorsignal erzeugt. Dieses Detektorsignal wird in einem nachfolgenden Impulsformer der Anordnung nochmals differenziert und danach einem Schaltkreis mit einer eingestellten Schaltschwelle zugeführt. Die so erzeugten Schaltsignale der Flankendetektoranordnung steuern einen Analogschalter in der Übertragungsleitung, an dessen Ausgangsseite ein Speicherkondensator angeordnet ist. Während der Dauer des Schaltsignales der Flankendetektoranordnung ist der Analogschalter unterbrochen, so daß während des unterbrochenen Zustandes des Analogschalters der Speicherkondensator den Pegel des ausgangsseitigen Übertragungssignals bestimmt und das Übertragungssignal so lange auf dem zuletzt vor dem Öffnen des Analogschalters anliegenden Pegel hält. Nach dem Wiederschließen des Analogschalters, d. h. nach dem Ende der Signalflanke verändert sich das Signal auf der ausgangsseitigen Übertragungsleitung mit der verhältnismäßig kurzen Ladezeit des Speicherkondensators auf den Pegel des Signalzustandes nach der Signalflanke, so daß die Steilheit der korrigierten Signalflanke nur noch von der kurzen Ladezeit des Speicherkondensators abhängig ist.

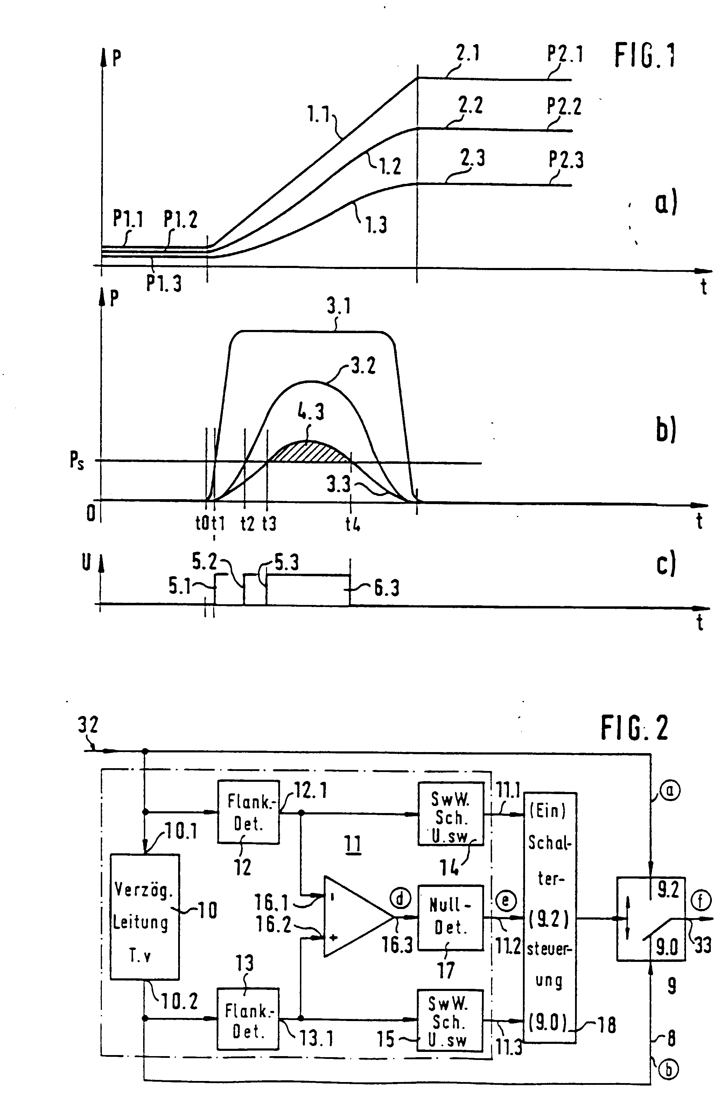

Die vom Flankendetektor erzeugten Differenziationssignale sind jedoch in ihrer Gestalt und ihrer Amplitude sehr stark von der Beschaffenheit der detektierten Signalflanke abhängig. Weist die zu detektierende Signalflanke dazu noch eine verhältnismäßig hohe Flankendauer auf, dann ist der Zeitpunkt, an dem das erzeugte Detektionssignal den Schwellwertpegel erreicht und der den Detektionszeitpunkt der detektierten Signalflanke darstellt, zeitlich sehr ungenau, wie in den Diagrammen (a) bis (c) der Figur 1 schematisch dargestellt ist. Im Diagramm (a) sind schematisch die Signalflanken 1.1, 1.2 und 1.3 dreier übertragener elektrischer Signale 2.1, 2.2 und 2.3 dargestellt, die jeweils in einer Flankendauer T.f von einem Pegel P1.1, P1.2 bzw. P1.3 auf einen Pegel P2.1, P2.2 bzw. P2.3 ansteigen. Im Diagramm (b) sind schematisch die drei zugehörigen glockenförmigen Detektionssignale 3.1, 3.2 und 3.3 eines nicht näher beschriebenen Flankendetektors dargestellt. Außerdem ist im Diagramm (b) der Bezugspegel Ps eingezeichnet, bei dem der diesen Bezugspegel überschreitende Teil 4.3 des Detektorsignals 3.3 am Ausgang eines Schwellwertschalters einer üblichen Detektoranordnung ein im Diagramm (c) dargestelltes Schaltsignal 6.3 erzeugt. Da die drei Detektionssignale 3.1, 3.2 und 3.3 selbst sehr unterschiedliche Amplituden und Flankensteigungen aufweisen, durchlaufen sie zu sehr unterschiedlichen Zeiten tl, t2 oder t3 den Bezugspegel Ps der Detektoranordnung, obwohl sie am gleichen Anfangszeitpunkt t0 beginnen. Diese unterschiedlichen Zeitpunkte legen jedoch die Schaltflanken 5.1, 5.2 und 5.3 für den Detektionszeitpunkt der detektierten Signalflanken fest. In vielen Fällen ist eine derartige Abhängigkeit des Detektionszeitpunktes der detektierten Signalflanken von der Beschaffenheit der Flanken der Detektionssignale nicht tragbar.

Aus der Druckschrift GB-A-2 223 022 ist eine Signalform- Korrekturvorrichtung bekannt, die im Signalweg zwei in Serie geschaltete Verzögerungsschaltungen enthält, so daß an den Eingängen eines elektronischen Wahlschalters ein Eingangssignal, ein einfach verzögertes und ein zweifach verzögertes Signal bereitstehen. Der Wahlschalter überträgt in seiner Ruhestellung das einfach verzögerte Signal zum Ausgang der Vorrichtung. Je eine Subtrahieranordnung bilden aus dem Eingangssignal und dem einfach verzögerten Signal ein erstes Differenzsignal und aus dem einfach verzögerten und dem zweifach verzögerten Signal ein zweites Differenzsignal. Ein Komparator vergleicht die Differenzsignale und generiert eine vom Vergleichsergebnis abhängige Setzspannung für einen Steuersignalgenerator, sofern die Absolutwerte infolge einer Signalflanke unterschiedlich sind. Eine weitere Subtrahieranordnung ermittelt parallel dazu die Differenz der Absolutwerte. Von dieser Differenz wird ebenfalls ein Absolutwert gebildet, den ein weiterer Komparator mit einer Schwellspannung vergleicht. Der Komparator liefert eine Schaltspannung für den Steuersignalgenerator, wenn der letztgenannte Absolutwert die Schwellspannung übersteigt. Diese Schaltspannung bewirkt, daß der Steuersignalgenerator den Wahlschalter sowohl zum Beginn als auch zum Ende einer Signalflanke in Abhängigkeit von der Setzspannung zum zweifach verzögerten Signal oder zum Eingangssignal umschaltet. Für die Zeit zwischen beiden Umschaltungen liegt der Absolutwert unterhalb der Schwellspannung, so daß der Wahlschalter das einfach verzögerte Signal zum Ausgang der Korrekturschaltung überträgt. Auf diese Weise wird eine Signalflanke mit einer geringen Steigung in eine mit einem steileren jedoch stufenförmigen Verlauf gewandelt. Die bekannte Korrekturvorrichtung liefert also sowohl zum Beginn als auch zum Ende einer Signalflanke je einen Schaltimpuls, deren Schaltzeitpunkte jedoch stark von der Gestalt der detektierten Signalflanke abhängen.

Aus der Druckschrift US-A-4 758 891 ist eine Lösung zum Verbessern der Steilheit der Signalflanken eines Videosignals bekannt. Die Schaltung enthält ebenfalls im Signalweg zwei in Serie geschaltete Verzögerungsschaltungen und einen elektronischen Wahlschalter, an dessen Eingängen das Eingangssignal, das einfach verzögerte und das zweifach verzögerte Signal bereitstehen. Der Wahlschalter überträgt ebenfalls in seiner Ruhestellung das einfach verzögerte Signal zum Ausgang der Vorrichtung. Vom Eingangssignal werden sowohl die erste als auch die zweite Ableitung gebildet und miteinander multipliziert. Das Produkt aus beiden Signalableitungen wird verstärkt und begrenzt. Auf diese Weise entsteht ein Steuersignal in Form einer Rechteckschwingung die den Wahlschalter wie bei der vorangegangenen Lösung umschaltet, wobei während einer Signalflanke abhängig von deren Neigungsrichtung direkt zwischen dem zweifach verzögerten und dem Eingangssignal umgeschaltet wird.

Der Erfindung liegt die Aufgabe zugrunde, eine Flankendetektionsanordnung einer im Oberbegriff des Anspruches 1 angegebenen Art anzugeben, die mittels eines Schaltsignales einen Detektionszeitpunkt einer detektierten Signalflanke ausgibt, der weitgehend unabhängig von der Gestalt der detektierten Signalflanke ist. Diese Aufgabe wird für eine im Oberbegriff des Anspruches 1 angegebene Flankendetektionsanordnung durch die im kennzeichnenden Teil des Anspruches 1 angegebenen Merkmale gelöst, wobei der Text des kennzeichnenden Teils des Anspruches 1 Bestandteil dieses Textes ist.

Mit den Mitteln der Erfindung werden in einfacher Weise an der zu detektierenden Flanke des verzögerten Signales zwei gleichgestaltete, versetzte, sich aber noch überlappende Detektionssignale erzeugt. Durch die Subtraktion der beiden sich überlappenden Detektionssignale in einer Subtrahieranordnung entsteht ein Differenzsignal, das im Bereich der Überlappung der beiden Einzelsignale in der Mitte des Differenzsignales einen Nulldurchgang an der steilsten Stelle des Differenzsignales enthält. Die Lage des Nulldurchgangs ist weitgehend unabhängig von der Gestalt und der Amplitude der Detektorsignale der beiden Flankendetektoren.

Die Unteransprüche, deren Text ebenfalls Bestandteil des Textes dieser Beschreibung ist, kennzeichnen vorteilhafte Ausgestaltungen von Flankendetektoren gemäß der Erfindung. Diese Ausgestaltungen sind in der Beschreibung anhand von Beispielen der Erfindung näher erläutert. Ebenso ist in den Unteransprüchen eine besonders vorteilhafte Weiterbildung der Erfindung angegeben, die in der nachfolgenden Beschreibung von Beispielen der Erfindung ebenfalls näher erläutert ist. Diese Weiterbildung ermöglicht eine besonders einfache Korrektur der Steilheit der Signalflanken eines übertragenen Signales, insbesondere dann, wenn längere Übertragungswege oder Beschneidungen der Übertragungsbandbreite des übertragenen Signales darin enthaltene Signalflanken stark verflachen.

Die Erfindung wird nachfolgend anhand vorteilhafter Ausführungsbeispiele näher erläutert. Diese Erläuterungen dienen lediglich dem besseren Verständnis dieser Erfindung. Die Erfindung ist jedoch nicht auf die beschriebenen Ausgestaltungen insbesondere der Flankendetektoren und der beschriebenen Weiterbildungen der Flankendetektoranordnung beschränkt. Die Erfindung umfaßt insbesondere jede Art der Ausgestaltung von Flankendetektoren und Anordnungen zur Erzeugung eines Differenzsignales, das die Merkmale zur Erfüllung der Erfindung aufweist, nämlich die subtraktive Überlagerung zweier gleicher Detektorsignale zu einem Differenzsignal mit einem definierten Nulldurchgang.

In den zu der Erläuterung der Erfindung zugehörigen Zeichnung zeigen
- Fig. 1: in einem Diagramm (a) eine Signalflanke mehrerer übertragener elektrischer Signale, in einem Diagramm (b) die zugehörigen Detektorsignale einer üblichen Flankendetektion mit eingezeichnetem Bezugspegel und in einem Diagramm (c) die an den Detektionszeitpunkten erzeugten Schaltflanken der Detektions-Schaltsignale,
- Fig. 2: ein Blockschaltbild einer Flankendetektoranordnung mit einem von dieser gesteuerten Signalumschalter,
- Fig. 3: in den Diagrammen (a), (b) und (d) bis (f) im Blockschaltbild gemäß Figur 2 an den mit den Diagrammbezeichnungen versehenen Stellen auftretende Signale,
- Fig. 4: ein Blockschaltbild einer anderen Ausgestaltung einer Flankendetektoranordnung mit einem von dieser gesteuerten dreistufigen Signalumschalter,
- Fig. 5: in den Diagrammen (a) bis (f) die an den mit den Diagrammbezeichnungen gekennzeichneten Stellen des Blockschaltbildes gemäß Figur 4 auftretenden Signale,
- Fig. 6: den Nulldurchgang von Detektions-Differenzsignalen unterschiedlicher Amplitude.

Eine in Figur 2 in einem Blockschaltbild schematisch dargestellte Flankendetektoranordnung 11 enthält eine Verzögerungsleitung 10, die in einer Übertragungsleitung 8 angeordnet ist. Außerdem ist an die Flankendetektoranordnung 11 ein von dieser gesteuerter Signalumschalter 9 angeschlossen, dessen einer Auswahlkontakt 9.0 mit dem Ausgang 10.2 der Verzögerungsleitung 10 verbunden ist und dessen anderen Auswahlkontakt 9.2 mit dem Eingang 10.1 der Verzögerungsleitung verbunden ist. Der Signalumschalter 9 wird im dargestellten Ausführungsbeispiel von den Schaltsignalen einer Detektoranordnung 11 zur zeitlichen Detektion von Signalflanken eines auf der Übertragungsleitung 8 übertragenen elektrischen Signals gesteuert.

Die Flankendetektoranordnung 11 enthält außer der in die Übertragungsleitung 8 geschalteten Verzögerungsleitung 10 einen ersten, an den Eingang 10.1 der Verzögerungsleitung angeschlossenen Flankendetektor 12 und einen zweiten, an den Ausgang 10.2 der Verzögerungsleitung angeschlossen zweiten Flankendetektor 13, zwei Schwellwertschaltungen, von den die eine Schwellwertschaltung 14 an den Ausgang 12.1 des ersten Flankendetektors 12 und die zweite Schwellwertschaltung 15 an den Ausgang 13.1 des zweiten Flankendetektors 13 angeschlossen ist, eine Subtrahieranordnung 16, deren einer Subtrahiereingang 16.1 an den Ausgang des ersten Flankendetektors 12 und deren anderer Subtrahiereingang an den Ausgang des zweiten Flankendetektors 13 angeschlossen ist, und einen an den Ausgang 16.3 der Subtrahieranordnung 16 angeschlossenen Nulldurchgangsdetektor 17. Die Ausgänge der Schwellwertschaltungen 14 und 15 und des Nulldurchgangsdetektors 17 münden in Detektorausgänge 11.1 bis 11.3 der Flankendetektoranordnung 11. An diese Ausgänge ist eine Schaltersteueranordnung 18 angeschlossen, deren Ausgangssignale den Signalumschalter 9 in Abhängigkeit der Eingangssignale aus der Flankendetektoranordnung 11 steuern.

Die Wirkungsweise dieses Ausführungsbeispieles einer Flankendetektoranordnung wird anhand der Diagramme (a), (b) und (d) bis (f) der Figur 3 näher erläutert. Der Ort der in Diagrammen (a) bis (f) schematisch dargestellten Signale ist im Blockschaltbild der Figur 2 durch in Kreise gesetzte Diagrammbezeichnungen gekennzeichnet. Diagramm (a) stellt einen Signalausschnitt des unverzögerten elektrischen Signales 19 mit einer Signalflanke 19.0 dar, über die das übertragene Signal innerhalb eines Flankenzeitraumes T.f von einem ersten Signalzustand 19.1 in einen zweiten Signalzustand 19.2 übergeht. Diagramm (b) stellt einen Signalausschnitt des aus dem unverzögerten Signal 19 am Ausgang 10.2 der Verzögerungsleitung 10 durch eine Signalverzögerung um die Verzögerungszeit T.v erzeugten verzögerten Signals 20 mit der Signalflanke 20.0 dar, über die das übertragene verzögerte Signal in der gleichen Weise wie das unverzögerte Signal von einem ersten Signalzustand 20.1 in einen zweiten Signalzustand 20.2 übergeht. Die Flankendetektoren 12 und 13 erzeugen aus den detektierten Signalflanken 19.0 und 20.0 durch eine Differentiation dieser Flanken der Gestalt der Flanken entsprechende Detektionssignale 22 und 23, von denen das vom ersten Flankendetektor 12 erzeugte Detektionssignal 22 im Diagramm (d) punktiert, das vom zweiten Flankendetektor 13 erzeugte Detektionssignal 23 ausgezogen dargestellt ist. Die beiden im Diagramm (d) dargestellten Detektionssignale 22 und 23 überlappen sich zeitlich innerhalb eines Überlappungszeitbereiches 24, der gleich der Differenz T.ü der Flankendauer T.f der Signalflanke 19.0 abzüglich der Verzögerungszeit T.v der Verzögerungsleitung 10 ist, wenn die Verzögerungszeit kleiner als die Flankendauer ist. Die Subtrahieranordnung 16 bildet aus den beiden gleichgestalteten Detektionssignalen 22 und 23 durch Subtraktion ein Differenzsignal 25, das in seinem Anfangs- und seinem Endbereich den Detektionssignalen 22 und 23 der Flankendetektoren 12 und 13 folgt und im Überlappungsbereich mit einer hohen Steilheit die Nullinie 26 des Differenzsignales durchläuft, wenn die Verzögerungszeit T.v der Verzögerungsleitung 10 kleiner ist als die kürzeste Flankendauer T.fmin, wie im Diagramm (d) dargestellt ist. Dieses Differenzsignal 26 wird von dem Nulldurchgangsdetektor 17 abgetastet. Er erzeugt bei der Detektion eines Nulldurchganges 27 des Differenzsignales 25 durch die Nullinie 26 eine Schaltflanke 28 eines Schaltsignales 29 am Ausgang 11.2 der Flankendetektionsanordnung 11, wie in Diagramm (e) dargestellt ist.

Durch die Subtraktion der beiden Detektionssignale 22 und 23 der Flankendetektoren 12 und 13 liegt der Nulldurchgang 27 des Differenzsignales 25 immer in der Mitte 30 des Überlappungsbereiches 24 der beiden Detektionssignale 22 und 23, unabhängig von der Gestalt und Amplitude dieser Detektionssignale.

Überschreitet im dargestellten Ausführungsbeispiel der Verlauf des ersten Detektionssignales 22 zum Zeitpunkt t1 einen in der ersten Schwellwertschaltung 14 einen als Schaltschwelle eingestellten Bezugswert U.sw, wie in Diagramm (d) durch die Linie 31 dargestellt ist, schaltet ein nicht näher dargestelltes Ausgangssignal der ersten Schwellwertschaltung 14 am Ausgang 11.1 der Flankendetektoranordnung 11 die Schaltersteueranordnung 18 in einen Bereitschaftszustand, in dem sie bei dem Empfang der Schaltflanke 28 eines vom Nulldurchgangsdetektor 17 erzeugten Schaltsignales 29 den Signalumschalter 18 in einen Schaltzustand einstellt, in dem das Übertragungssignal 19 vom Signaleingang 32 der Detektoranordnung über den zweiten Auswahlkontakt 9.2 unverzögert an den Ausgang 33 des Signalumschalters 9 übertragen wird. Die Signalflanke 34.0 des im Diagramm (f) dargestellten Ausgangsignales 34 am Ausgang 33 des Signalumschalters, die durch die Umschaltung des Signalumschalters vom Schaltzustand des leitenden Auswahlkontaktes 9.0 in den Schaltzustand des leitenden Auswahlkontaktes 9.2 entsteht, ist nur noch vom Umschaltverhalten des Signalumschalters 9 abhängig und gegenüber vor dem Signalumschalter übertragenen Signalflanke 20.0 sehr versteilert und selbst bei sehr stark schwankender Signalflankendauer T.f nur verhältnismäßig kleinen zeitlichen Schwankungen unterworfen.

In einer vorteilhaften Weiterbildung des dargestellten Ausführungsbeispieles erzeugt zum Zeitpunkt t5, an dem der Verlauf des Detektionssignales am Ausgang 13.1 des zweiten Flankendetektors 13 den Bezugspegel U.sw der zweiten Schwellwertschaltung 15 wieder unterschreitet, der Flankendetektor ein Endesignal am Ausgang 11.3, durch das die Schaltersteueranordnung 18 wieder in ihren Ruhezustand gelangt, in dem sie das verzögerte Übertragungssignal 20 über den Auswahlkontakt 9.0 des Signalumschalters 9 als Ausgangssignal 34 an den Signalausgang 33 des Signalumschalters überträgt.

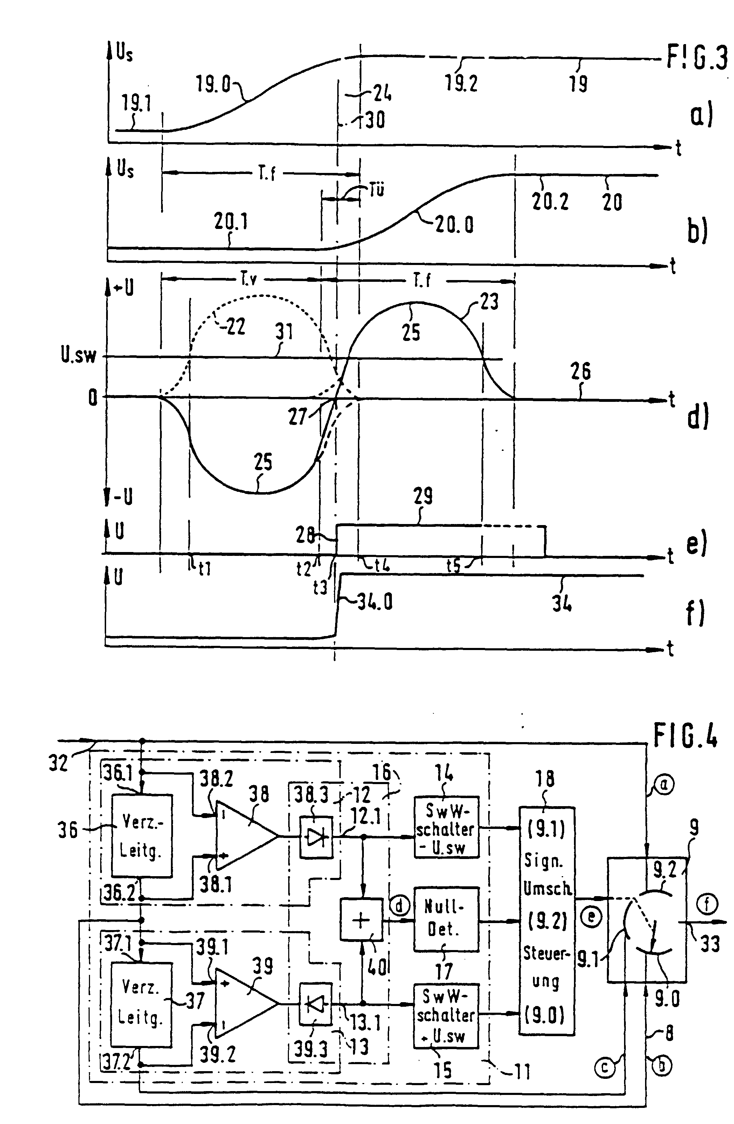

In Figur 4 ist ein Blockschaltbild einer anderen vorteilhaften Ausbildung einer Flankendetektoranordnung 11 dargestellt, die sich von der in Figur 2 dargestellten Flankendetektoranordnung 11 im wesentlichen durch die Ausbildung der Flankendetektoren 12 und 13 unterscheidet. Die Flankendetektoren des hier dargestellten Ausführungsbeispieles bestehen aus einer Verzögerungsleitung 36 bzw. 37 und einer Subtrahierschaltung 38 bzw. 39. Im dargestellten Ausführungsbeispiel sind die Subtrahierschaltungen Differenzverstärker. Im ersten Flankendetektor 12 ist der Positiveingang 38.1 der Subtrahierschaltung 38 mit dem Ausgang der zugehörigen Verzögerungsleitung 36 und beim zweiten Flankendetektor 13 mit dem Eingang der zugehörigen Verzögerungsleitung 37 verbunden, während der Negativeingang 38.2 der Subtrahierschaltung 38 des ersten Flankendetektors 12 mit dem Eingang der zugehörigen Verzögerungsleitung 36 und der Negativeingang 39.2 der Subtrahierschaltung 39 des zweiten Flankendetektors mit dem Ausgang der zugehörigen Verzögerungsleitung 37 verbunden ist. Durch diese Maßnahme werden die von den Flankendetektoren 12 und 13 bei der Detektion der Signalflanken erzeugten Detektionssignale 22 und 23 gegenpolig erzeugt, so daß die nachgeschaltete Subtrahieranordnung 16 mit einer gegenüber einer Subtrahierschaltung wesentlich symetrischer ausbildbaren Addierschaltung 40 aufgebaut werden kann. Ein Teil der Subtrahieranordnung 16 ist hier die unterschiedliche Polung der Subtrahierschaltungen der Flankendetektoren. Zur Unterstützung dieser unterschiedlichen Polung enthalten im dargestellten Ausführungsbeispiel die beiden Flankendetektoren zusätzlich Ausgangsschaltungen 38.3 bzw. 39.3 unterschiedlicher Polung.

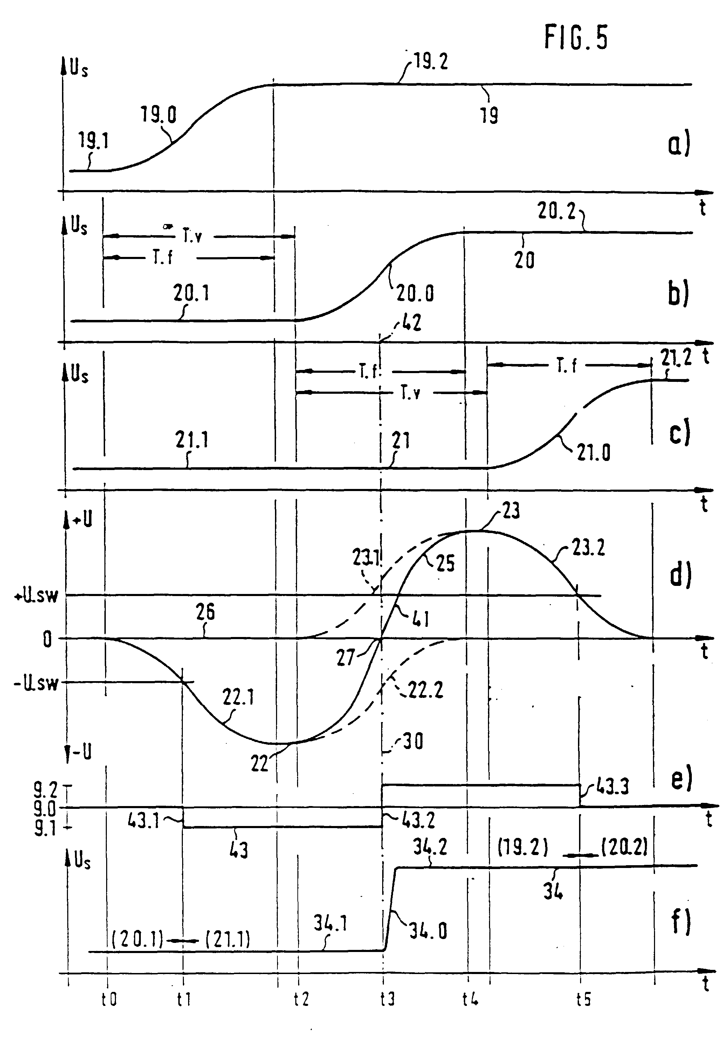

Im dargestellten Ausführungsbeispiel ist der an die Flankendetektionsanordnung 11 angeschlossene Signalumschalter 9 ein elektronischer Dreistellungsschalter, der in der Ruhestellung 9.0 das einfach verzögerte Signal 19, das ausschnittsweise im Diagramm (b) der Figur 5 dargestellt ist, in der zweiten Schalterstellung 9.1 das zweifach verzögerte Signal 21 (im Diagramm (c) der Figur 5 dargestellt) und in der dritten Schalterstellung 9.3 das unverzögerte Signal (Diagramm (a) der Figur 5) an den Ausgang 33 des Signalumschalters 9 überträgt.

Die Wirkungsweise des letztgenannten Ausführungsbeispieles einer Flankendetektoranordnung im Zusammenspiel mit einem Dreistellungs-Signalumschalter 9 wird anhand der Diagramme (a) bis (f) der Figur 5 erläutert. Die Diagramme (a), (b) und (f) stimmen mit den Diagrammen (a), (b) und (f) der Figur 3 überein und enthalten die gleichen Bezugszeichen wie in Figur 3. Das Diagramm (d) in Figur 5 enhält den Kurvenzug des Detektionssignals 22 des ersten Flankendetektors 12, der aus den Kurvenzügen 22.1 und 22.2 zusammengesetzt ist und den Kurvenzug des Detektionssignales 23 des zweiten Flankendetektors 13, der aus den Kurvenzügen 23.1 und 23.2 zusammengesetzt ist. Die Addition dieser beiden Signale in der Addierschaltung 40 ergibt ein Differenzsignal 25, das aus den Kurvenzügen 22.1, 41 und 23.2 zusammengesetzt ist und im Nulldurchgang 27 die Nullinie 26 des Differenzsignales mit der größten Steigung des Differenzsignales durchläuft. Ein eindeutiger Nulldurchgang 27 ist jedoch nur gegeben, wenn sich die beiden Detektionssignale 22 und 23 der beiden Flankendetektoren 12 und 13 zeitlich teilweise überlappen. Der Nulldurchgang 27 liegt bei diesem Ausführungsbeispiel stets in der Mitte 42 der Flankendauer T.f der Signalflanke 20.0 des einfach verzögerten Signals 20.

In das Diagramm (d) der Figur 5 sind außerdem die Bezugspotentiale +U.sw und -U.sw der beiden Schwellwertschaltungen 14 und 15 eingezeichnet, an denen die Schwellwertschaltungen eine nicht näher dargestellte Schaltflanke erzeugen, wenn das anliegende Detektionssignal 22 bzw. 23 in seinem Verlauf den Pegel dieser Bezugswerte durchläuft. An der ersten Schaltflanke 43.1 des Schaltsignales 43 der Schaltersteueranordnung 18, die durch die erste Schaltflanke des nicht näher dargestellten Schaltsignales der ersten Schwellwertschaltung 14 zum Zeitpunkt t1 ausgelöst wird, wird der Signalumschalter 9 von der Schalterstellung 9.0 (Ruhestellung) in die erste Schalterstellung 9.1 umgeschaltet, in der das zweifach verzögerte Signal 21 in seinem ersten Signalzustand an den Ausgang 33 des Signalumschalters übertragen wird. An dem vom Nulldurchgangsdetektor 17 detektierten Nulldurchgang 27 des Differenzsignales 25 zum Zeitpunkt t3 steuert die Schaltflanke des Nulldurchgangsdetektors die Schaltersteueranordnung 18 in einen Schaltzustand, in dem das von ihr erzeugte Schaltersteuersignal 43 mit der Schaltflanke 43.2 den Signalumschalter 9 zum Zeitpunkt t3 des Nulldurchganges in die zweite Schalterstellung 9.2 umschaltet, in der der Signalumschalter seinen Signalausgang 33 mit der Umschaltgeschwindigkeit des Signalumschalters vom ersten Signalzustand 21.1 des zweifach verzögerten Übertragungssignales 21 in den zweiten Signalzustand 19.2 des unverzögerten Übertragungssignales 19 umschaltet, wie im Diagramm (f) der Figur 5 schematisch dargestellt ist. Die Flankensteilheit der Signalflanke 34.0 des Ausgangssignales 34 am Signalausgang 33 des Signalumschalters 9 hängt dann nur noch von den Umschalteigenschaften des Signalumschalters und der Detektionszeitpunkt, nämlich der Umschaltzeitpunkt t3, von den Schwankungen der Flankendauer T.f ab. Mit der Rückflanke des letzten Durchganges des Detektionssignales 23 des zweiten Flankendetektors 13 zum Zeitpunkt t5 durch den Bezugspegel U.sw wird im dargestellten Ausführungsbeispiel der Signalumschalter 9 mit der Schaltflanke 43.3 in seine Ruhestellung zurückgestellt, in der über seinen Auswahlkontakt 9.0 das einfach verzögerte Signal 20 an den Signalausgang 33 des Signalumschalters 9 übertragen wird.

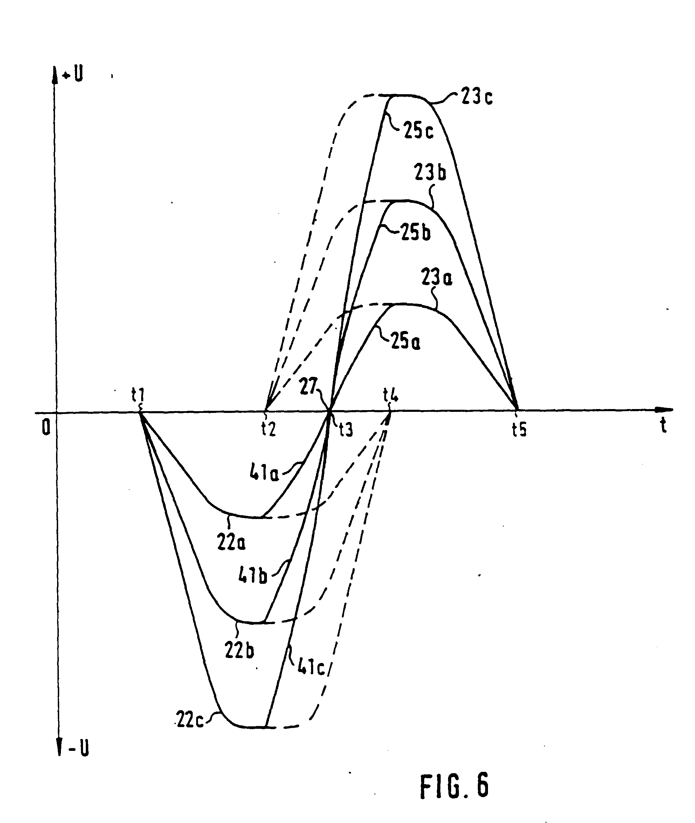

Auch bei dem soeben beschriebenen Ausführungsbeispiel liegt durch die Addition der beiden gegenpoligen Detektionssignale 22 und 23 der Flankendetektoren 12 und 13 der Nulldurchgang 27 des Differenzsignales 25 immer in der Mitte 30 des Überlappungsbereiches 24 der beiden Detektionssignale 22 und 23, unabhängig von der Gestalt und der Amplitude dieser Detektionssignale. Dies wird anhand der Fig. 6 nochmals veranschaulicht, in der schematisch jeweils drei Detektionssignale 22a, 22b und 22c sowie 23a, 23b und 23c unterschiedlicher Amplitude der beiden Flankendetektoren 12 und 13 und die durch die Addition dieser Detektionssignale gebildeten Differenzsignale 25a, 25b und 25c dargestellt sind. Alle drei Differenzsignale durchlaufen die Nullinie 26 der Differenzsignale mit der steilsten Stelle ihres mittleren Kurventeiles 41a, 41b, 41c am Nulldurchgang 27 zum gleichen Zeitpunkt t3. Dieser Detektionszeitpunkt ist somit unabhängig von der Amplitude der Detektionssignale und in Folge der symetrischen Ausbildung der Detektionssignale auch unabhängig von der Gestalt der Detektionssignale.

### Bezugszeichenliste

- 1.1 bis 1.3: Signalflanken
- 2.1 bis 2.3: elektrische Signale
- 3.1 bis 3.3: Flankendetektionssignale
- 4.3: Bezugspegel überschreitender Teil des Flankendetektionssignales 3.3
- 5.1 bis 5.3: Einschaltflanken
- 6.3: Schaltsignal aus Flankendetektion
- 8: Übertragungsleitung
- 9: Signalumschalter
- 9.0, 9.1, 9.2: Auswahlkontakte von 9
- 9.3: Steuereingang von 9
- 10: Verzögerungsleitung
- 10.1: Eingang von 10
- 10.2: Ausgang von 10
- 11: Flankendetektoranordnung
- 11.1 bis 11.3: Detektorausgänge von 11
- 12: Flankendetektor
- 12.1: Ausgang von 12
- 13: Flankendetektor
- 13.1: Ausgang von 13
- 14: Schwellwertschalter
- 15: Schwellwertschalter
- 16: Subtrahierschaltung
- 16.1, 16.2: Subtrahiereingänge von 16
- 16.3: Ausgang von 16
- 17: Nulldurchgangsdetektor
- 18: Schaltersteueranordnung
- 19: Unverzögertes elektrisches Signal
- 19.0: Signalflanke von 19
- 19.1: Erster Signalzustand von 19
- 19.2: Zweiter Signalzustand von 19
- 20: Verzögertes elektrisches Signal
- 20.0: Signalflanke von 20
- 20.1: Erster Signalzustand von 20
- 20.2: Zweiter Signalzustand von 20
- 21: Zweifach verzögertes elektrisches Signal
- 21.0: Signalflanke von 21
- 21.1: Erster Signalzustand von 21
- 21.2: Zweiter Signalzustand von 21
- 22: Detektionssignal von 12
- 23: Detektionssignal von 13
- 24: Überlappungszeitbereich
- 25: Differenzsignal
- 26: Nullinie
- 27: Nulldurchgang
- 28: Schaltflanke von 29
- 29: Schaltsignal
- 30: Mitte von 24
- 31: Bezugswertlinie (U.sw)
- 32: Signaleingang von 11
- 33: Signalausgang von 9
- 34: Ausgangssignal von 33
- 34.0: Signalflanke von 34
- 34.1: Erster Signalzustand von 34
- 34.2: Zweiter Signalzustand von 34
- 36: Verzögerungsleitung von 12
- 36.1: Eingang von 36
- 36.2: Ausgang von 36
- 37: Verzögerungsleitung
- 37.1: Eingang von 37
- 37.2: Ausgang von 37
- 38: Subtrahierschaltung von 12
- 38.1, 38.2: Eingänge von 38
- 39: Subtrahierschaltung von 13
- 39.1, 39.2: Eingänge von 39
- 38.3: Negativausgang von 38
- 39.3: Positivausgang von 39
- 40: Addierschaltung
- 41: Mittleres Kurventeil
- 42: Mitte der Flankendauer
- 43: Schaltsignal von 18
- 43.1 bis 43.3: Schaltflanken von 43

## Patentansprüche

1. Flankendetektionsanordnung zur Erzeugung eines Schaltsignals (29, 43) mit einer Schaltflanke (28, 43,2) beim Vorliegen einer Signalflanke (19.0) in einem elektrischen Eingangssignal (19) enthaltend:
- mindestens eine erste Verzögerungsleitung (10, 36), die vom Eingangssignal (19) ein verzögertes Signal (20) bildet
- einen ersten Flankendetektor (12), der vom Eingangssignal (19) ein erstes Detektionssignal (22) bildet, das jeweils einen Einzelimpuls während der Signalflanken (19.0) aufweist
- einen zweiten Flankendetektor (13), der vom verzögerten Signal (20) ein zweites Detektionssignal (23) bildet, das ebenfalls jeweils einen Einzelimpuls während der Signalflanken (20.0) des verzögerten Signals (20) aufweist und gestaltmäßig mit dem ersten Detektionssignal übereinstimmt
- eine Subtrahieranordnung (16), die aus den beiden Detektionssignalen (22, 23) ein Differenzsignal (25) bildet, das einen Nulldurchgang (27) zeitlich zwischen den Einzelimpulsen des ersten Detektionssignals (22) und des zweiten Detektionssignals (23) aufweist,
**gekennzeichnet durch** einen an den Ausgang (16.3) der Subtrahieranordnung (16) angeschlossenen Nulldurchgangsdetektor (17), der ein Schaltsignal (29) erzeugt, das zum Zeitpunk (t3) des Nulldurchgangs (27) eine Schaltflanke (28) enthält, und daß die Verzögerungszeit (T.v) der Verzögerungsleitung (10, 36) derart bemessen ist, daß sich die beiden von den Signaldetektoren erzeugten Detektionssignale (22, 23) zeitlich teilweise überlappen.

2. Flankendetektionsanordnung nach Anspruch 1, dadurch gekennzeichnet, daß die Flankendetektoren (12, 13) jeweils eine das Eingangssignal (19) bzw. das verzögerte Signal (20) differenzierende Schaltung sind, die jeweils ein Detektionssignal (22, 23) erzeugen, das die Steilheit der entsprechenden Signalflanke (19.0, 20.0) kennzeichnet.

3. Flankendetektionsanordnung nach Anspruch 1, dadurch gekennzeichnet, daß die Verzögerungszeit (T.v) der Verzögerungsleitung (10, 36) geringfügig kleiner ist als die maximale Flankendauer (T.f) des Eingangssignals (19).

4. Flankendetektionsanordnung nach Anspruch 1, dadurch gekennzeichnet, daß beide Flankendetektoren (12, 13) je eine Verzögerungsleitung (36, 37) und eine Differenzschaltung (38, 39) enthalten, welche mit einem Differenzeingang am Eingang (36.1, 37.1) und mit dem anderen Differenzeingang am Ausgang (36.2, 37.2) der entsprechenden Verzögerungsleitung (36, 37) angeschlossen ist.

5. Schaltungsanordnung zur Korrektur der Flankensteilheit der Signalflanken (19.0) eines Eingangssignals (19), mit einer Flankendetektoranordnung nach einem der Ansprüche 1 bis 4 mit einem im Signalweg angeordneten Signalumschalter (9), dem an den Auswahlkontakten (9.0 bis 9.2) mindestens sowohl das Eingangssignal (19) als auch das verzögerte Eingangssignal zugeführt werden, und die so ausgestaltet ist, daß im Ruhezustand (9.0) des Signalumschalters (9) das verzögerte EingangsSignal (20) zum Ausgang (33) des Signalumschalters und nach der Detektion der Signalflanke (20.0) das Eingangssignal (19) geschaltet ist.

6. Schaltungsanordnung nach Anspruch 6, dadurch gekennzeichnet, daß bei der Verwendung von Flankendetektoren (12, 13) mit einer Verzögerungsleitung (36; 37) der Signalumschalter (9) eine Schalterstellung (9.1) zwischen der Ruhestellung (9.0) und der Schalterstellung (9.2) nach der Detektion der Signalflanke (20.0) aufweist, die mit dem Detektionssignal (22) des ersten Flankendetektors (12) einstellbar ist und in welcher der Ausgang (33) des Signalumschalters mit dem Ausgang (37.2) der Verzögerungsleitung (37) des zweiten Flankendetektors (13) verbunden ist.

7. Schaltungsanordnung nach Anspruch 6, dadurch gekennzeichnet, daß zwischen dem Ausgang (12.1; 13.1) der Flankendetektoren (12, 13) und den zugehörigen Detektorausgängen (11.1, 11.3) der Flankendetektoranordnung (11) je eine Schwellwertschaltung (14; 15) angeordnet ist, zur Erzeugung eines Detektorausgangssignals, sobald der Pegel des Detektionssignals (22; 23) des Flankendetektors größer ist als ein in der Schwellwertschaltung eingestellter Bezugspegel (U.sw).

## Claims

1. An edge detection arrangement for generating a switching signal (29, 43) with a switching edge (28, 43, 2) in the presence of a signal edge (19.0) in an electrical input signal (19) comprising:
- at least one delay line (10, 36) which forms a delayed signal (20) from the input signal (19),
- a first edge detector (12) which, from the input signal (19), forms a first detection signal (22) which in each case has one single pulse during the signal edges (19.0),
- a second edge detector (13) which, from the delayed signal (20), forms a second detection signal (23) which likewise in each case has one single pulse during the signal edges (20.0) of the delayed signal (20) and the form of which corresponds to that of the first detection signal,
- a subtracter arrangement (16) which, from the two detection signals (22, 23), forms a difference signal (25) which has a zero transition (27) at the time between the single pulses of the first detection signal (22) and the second detection signal (23),
characterised by a zero transition detector (17) which is connected to the output (16.3) of the subtracter arrangement (16) and which generates a switching signal (29) which contains a switching edge (28) at the time (t3) of the zero transition (27), and that the delay time (T.v) of the delay line (10, 36) is selected such that the two detection signals (22, 23) generated by the signal detectors partially overlap in time.

2. An edge detection arrangement according to Claim 1, characterised in that the edge detectors (12, 13) in each case consist of a circuit which differentiates the input signal (19) and the delayed signal (20), which circuits in each case generate a detection signal (22, 23) which characterises the steepness of the corresponding signal edge (19.0, 20.0).

3. An edge detection arrangement according to Claim 1, characterised in that the delay time (T.v) of the delay line (10, 36) is slightly shorter than the maximum edge duration (T.f) of the input signal (19).

4. An edge detection arrangement according to Claim 1, characterised in that the two edge detectors (12, 13) in each case comprise a delay line (36, 37) and a differentiator circuit (38, 39), which differentiator circuit (38, 39) is connected by one differentiator input to the input (36.1, 37.1) of the corresponding delay line (36, 37) and by the other differentiator input to the output (36.2, 37.2) of said delay line (36, 37).

5. A circuit arrangement for correcting the edge steepness of the signal edges (19.0) of an input signal (19), with an edge detector arrangement according to one of Claims 1 to 4 having a signal change-over switch (9) which is arranged in the signal path and which is supplied at the selector contacts (9.0 to 9.2) with at least both the input signal (19) and the delayed input signal and which is designed such that in the rest state (9.0) of the signal change-over switch (9) the delayed input signal (20) is switched to the output (33) of the signal change-over switch and following the detection of the signal edge (20.0) the input signal (19) is switched to said output (33).

6. A circuit arrangement according to Claim 6, characterised in that when edge detectors (12, 13) with a delay line (36; 37) are used, the signal change-over switch (9) has a switch position (9.1) between the rest position (9.0) and the switch position (9.2) following the detection of the signal edge (20.0), which switch position can be set by the detection signal (22) of the first edge detector (12) and in which switch position the output (33) of the signal change-over switch is connected to the output (37.2) of the delay line (37) of the second edge detector (13).

7. A circuit arrangement according to Claim 6, characterised in that a threshold value circuit (14; 15) is in each case arranged between the output (12.1; 13.1) of the edge detectors (12, 13) and the associated detector outputs (11.1, 11.3) of the edge detector arrangement (11) for generating a detector output signal as soon as the level of the detection signal (22; 23) of the edge detector is greater than a reference level (U.sw) set in the threshold value circuit.

## Revendications

1. Dispositif de détection de transition pour la production d'un signal de commutation (29, 43) comportant une transition de commutation (28, 43, 2) lors de la présence d'une transition de signal (19.0) dans un signal d'entrée électrique (19) comprenant :
- au moins un premier circuit de retard (10, 36), qui forme un signal retardé (20) à partir du signal d'entrée (19)
- un premier détecteur de transition (12), qui forme, à partir du signal d'entrée (19), un premier signal de détection (22) qui comporte une impulsion unique pendant chacune des transitions du signal (19.0)
- un deuxième détecteur de transition (13), qui forme, à partir du signal retardé (20), un deuxième signal de détection (23) qui comporte également une impulsion unique pendant chacune des transitions de signal (20.0) du signal retardé (20) et qui a la même forme que le premier signal de détection
- un dispositif soustracteur (16), qui forme, à partir des deux signaux de détection (22, 23), un signal de différence (25) qui présente temporairement un passage par zéro (27) entre les impulsions uniques du premier signal de détection (22) et du deuxième signal de détection (23),
caractérisé par un détecteur de passage par zéro (17) branché à la sortie (16.3) du dispositif soustracteur (16) et produisant un signal de commutation (29) qui contient, à l'instant (t3) du passage par zéro, une transition de commutation (28), et par le fait que le temps de retard (T.v.) du circuit de retard (10, 36) est dimensionné de telle manière que les deux signaux de détection (22, 23) produits par les détecteurs de signal (22, 23) se recouvrent partiellement pendant un certain temps.

2. Dispositif de détection de transition selon la revendication 1, caractérisé en ce que les détecteurs de transition (12, 13) sont respectivement des circuits différentiateurs du signal d'entrée (19) et du signal retardé (20), qui produisent respectivement un signal de détection (22, 23), qui caractérise la raideur de la transition correspondante du signal (19.0, 20.0).

3. Dispositif de détection de transition selon la revendication 1, caractérisé en ce que le temps de retard (T.v.) du circuit de retard (10, 36) est légèrement inférieur à la durée maximale (T.f.) de la transition du signal d'entée (19).

4. Dispositif de détection de transition selon la revendication 1, caractérisé en ce que les deux détecteurs de transition (12, 13) contiennent chacun un circuit de retard (36, 37) et un circuit de différence (38, 39), qui est racordé à une entrée différentielle à l'entrée (36.1, 37.1) et à l'autre entrée différentielle à la sortie (36.2, 37.2) du circuit de retard correspondant (36, 37).

5. Dispositif de circuits pour la correction de la raideur de transition des transitions de signal (19.0) d'un signal d'entrée (19), comportant un dispositif détecteur de transition selon l'une des revendications 1 à 4 pourvu d'un commutateur de signal (9) placé dans le chemin du signal, auquel sont appliqués, sur les contacts de sélection (9.0 à 9.2), au moins le signal d'entrée (19) ainsi que le signal d'entrée retardé, et qui est constitué de telle manière que, dans l'état de repos (9.0) du commutateur de signal (9), le signal d'entrée retardé (20) et, après la détection de la transition du signal (20.0), le signal d'entrée (19) est commuté vers la sortie (33) du commmutateur de signal.

6. Dispositif de circuits selon la revendication 5, caractérisé en ce que, lors de l'utilisation de détecteurs de transition (12, 13) avec un circuit de retard (36, 37), le commutateur de signal (9) présente, entre la position de repos (9.0) et la position de commutateur (9.2) après la détection de la transition de signal (20.0), une position de commutateur (9.1) qui est réglable avec le signal de détection (22) du premier détecteur de transition (12) et dans lequel la sortie (33) du commutateur de signal est raccordée à la sortie (37.2) du circuit de retard (37) du deuxième détecteur de transition (13).

7. Dispositif de circuits selon la revendication 6, caractérisé en ce que, entre la sortie (12,1, 13.1) des détecteurs de transition (12, 13) et les sorties correspondantes (11.1, 11.3) du détecteur du dispositif détecteur de transition (11), est placé un circuit respectif de valeur de seuil (14, 15), pour la production d'un signal de sortie de détecteur, dès que le niveau du signal de détection (22, 23) du détecteur de transition est supérieur à un niveau de référence (U.sw) réglé dans le circuit de valeur de seuil.
